# EUROPEAN PATENT APPLICATION

(11) **EP 4 683 048 A1**
(43) Date of publication of application: **21.01.2026**
(21) Application number: 23926994.7
(22) Date of filing: 07.07.2023
(51) Int. Cl.: H01M 50/103, H01M 50/176

(54) **BATTERY CASE, BATTERY, AND ELECTRONIC DEVICE**

(30) Priority: 15.03.2023 CN 202320499475 U
(71) Applicant: China Ruilong Technology Co., Ltd., Suzhou, Jiangsu 215000 (CN)
(72) Inventor: CHEN, Haifeng, Suzhou, Jiangsu 215000 (CN)
(74) Representative: Winter, Brandl - Partnerschaft mbB
(86) International application number: PCT/CN2023/106354
(87) International publication number: WO 2024/187648

(57) **Abstract**

The present disclosure discloses a battery case, a battery, and an electronic device. The battery case includes a bottom plate, a peripheral side plate, and a positive electrode assembly. The bottom plate has a first plate body, a second plate body, and a connecting plate body connected between the first plate body and the second plate body. The peripheral side plate is annularly arranged at an outer periphery of the bottom plate and is connected to the bottom plate to form an accommodating cavity with an opening in one end. The positive electrode assembly is arranged on the second plate body. In the present disclosure, the bottom plate is divided into three parts: the first plate body, the second plate body, and the connecting plate body connected between the first plate body and the second plate body. The positive electrode assembly is arranged on the second plate body, which facilitates a mounting of the positive electrode assembly and lowers a requirement on a packaging process, thereby greatly improving a production efficiency and a qualification rate of a product. In addition, an inner insulation member of the positive electrode assembly separates a positive terminal from a cover plate, thereby avoiding a short-circuit phenomenon generated when the positive terminal is in contact with the cover plate.

## Description

Priority information: This application claims the priority of Chinese patent application No. 202320499475.4, filed on March 15, 2023, the content of which is incorporated herein by reference in its entirety.

### TECHNICAL FIELD

The present disclosure relates to the technical field of battery packaging, and in particular to a battery case, a battery, and an electronic device.

### BACKGROUND

The technical field of batteries includes many technical branches. A battery electrode packaging technology is one of mainly research items currently carried out by a person skilled in the art.

The existing technology provides a packaging shell and a battery (CN207504023U). A positive terminal is riveted to a first side wall. A negative terminal tab is welded to the first side wall. A nail covers a liquid injection port and is welded to an outer surface of the first side wall.

Usually, a height of a side wall of a battery case is only between 3.5 mm and 8.0 mm, and a peripheral side of the battery case is obstructed by other side walls. In an actual packaging process, it is very inconvenient to complete operations such as perforation, riveting, and welding on the side wall. This places an extremely high requirement on a packaging process, and greatly affects a production efficiency.

Therefore, it is necessary to improve the existing technology to overcome defects in the existing technology.

### SUMMARY

The present disclosure aims to provide a battery case, a battery, and an electronic device, to facilitate a mounting of a positive electrode assembly.

To solve the above technical problems, in a first aspect, the present disclosure provides a battery case, including:
a bottom plate, having a first plate body, a second plate body, and a connecting plate body connected between the first plate body and the second plate body;
a peripheral side plate, annularly arranged at an outer periphery of the bottom plate and connected to the bottom plate to form an accommodating cavity with an opening in one end; and
a positive electrode assembly, arranged on the second plate body.

Further, the battery case further includes a cover plate connected to the opening, and the cover plate is arranged opposite to the first plate body and the second plate body and seals the accommodating cavity.

Further, a free end of the peripheral side plate extends outward to form a flange; the cover plate is connected to the flange; and a distance between the first plate body and the cover plate is greater than a distance between the second plate body and the cover plate.

Further, the accommodating cavity includes a first accommodating cavity formed between the cover plate and the first plate body and a second accommodating cavity formed between the cover plate and the second plate body, and the first accommodating cavity and the second accommodating cavity are communicated with each other.

Further, at least a portion of the positive electrode assembly is arranged on an inner side of the second plate body; the positive electrode assembly includes a positive terminal and an outer insulation member; and the outer insulation member separates the positive terminal from the second plate body.

Further, the positive terminal includes a terminal body and a first sheet body connected to an end portion of the terminal body; the outer insulation member is annularly arranged outside the terminal body and is partially embedded in the second plate body; and the outer insulation member includes a ring body and a sleeve connected to the ring body; the sleeve is sleeved outside the terminal body and is arranged in the second plate body in a penetrating manner; the ring body is further provided with a limiting slot for accommodating the first sheet body; and the first sheet body is exposed outside the second plate body.

Further, the positive electrode assembly further includes an inner insulation member, and the inner insulation member separates the positive terminal from the cover plate.

Further, the inner insulation member separates the positive terminal from the second plate body; and the inner insulation member includes a first arm portion and a second arm portion arranged opposite to each other; and the positive terminal is at least partially located between the first arm portion and the second arm portion.

Further, the first arm portion is fitted with the second plate body, and the second arm portion is fitted with the cover plate; and the positive terminal includes a second sheet body; the first sheet body and the second sheet body are respectively located at two ends of the terminal body; the second sheet body is located between the first arm portion and the second arm portion; and the terminal body passes through the second plate body and extends to an outside of the second plate body.

Further, a groove is provided in a joint between the first arm portion and the second arm portion, and the first arm portion and the second arm portion are folded through the groove and arranged opposite to each other.

Further, an angle between the first arm portion and the second arm portion is 0 to 180° or 0 to 90° when the inner insulation member is in a free state.

Further, the groove includes a groove bottom surface and a connecting surface connected between the groove bottom surface and the first arm portion or the second arm portion; and the groove bottom surface is an arc, a rectangle, a trapezoid with a chamfer, or a rectangle with a chamfer; and the connecting surface is an arc surface, a plane, or a slope.

Further, the battery case includes a negative electrode assembly electrically connected to the second plate body, where the negative electrode assembly includes a connecting sheet connected to the second plate body.

Further, the second plate body is a single independent component or is composed of a plurality of components.

Further, the second plate body includes a first portion and a second portion; the first portion is connected to the second portion through a connecting portion; the first portion and the second portion form a step structure; and the positive electrode assembly and the negative electrode assembly are respectively arranged on the first portion and the second portion.

In a second aspect, the present disclosure further provides a battery, including the above battery case and a battery cell arranged in a first accommodating cavity of the battery case.

In a third aspect, the present disclosure further provides an electronic device, including the above battery case; or including the above battery.

Compared with the existing technology, the present disclosure has the following advantages:
According to the battery case of the present disclosure, the bottom plate is connected to the peripheral side plate annularly arranged at the outer periphery of the bottom plate to form the accommodating cavity with the opening in one end; the bottom plate is divided into three parts: the first plate body, the second plate body, and the connecting plate body connected between the first plate body and the second plate body; and the positive electrode assembly is arranged on the second plate body. On the one hand, a width of the second plate body of the positive electrode assembly can be freely controlled, and on the other hand, there is no obstruction from other components in a mounting direction. This facilitates a mounting operation of the positive electrode assembly, and lowers a requirement on a packaging process, thereby greatly improving a production efficiency and a qualification rate of a product.

### BRIEF DESCRIPTION OF THE DRAWINGS

The accompanying drawings described here are merely for the purpose of explanation, but are not intended to limit the scope of the present disclosure in any manner. In addition, shapes and proportional sizes of components in the drawings are merely exemplary, are used to help understand the present disclosure, and do not specifically limit the shapes and proportional sizes of the components in the present disclosure. Under the teaching of the present disclosure, a person skilled in the art may select various possible shapes and proportional sizes to implement the present disclosure according to a specific situation. In the accompanying drawings:
FIG. 1 is a schematic structural diagram of a battery case according to an embodiment of the present disclosure;
FIG. 2 is a schematic structural diagram of a battery case according to another embodiment of the present disclosure;
FIG. 3 is a cross-sectional view of a battery case according to an embodiment of the present disclosure;
FIG. 4 is a partial enlarged view of a position A in FIG. 3;
FIG. 5 is an exploded view of a battery case according to an embodiment of the present disclosure;
FIG. 6 is an exploded view of a positive electrode assembly according to an embodiment of the present disclosure;
FIG. 7 is a cross-sectional view of a battery case according to another embodiment of the present disclosure;
FIG. 8 is a partial enlarged view of a position B in FIG. 7;
FIG. 9 is an exploded view of a battery case according to another embodiment of the present disclosure;
FIG. 10 is an exploded view of a positive electrode assembly according to another embodiment of the present disclosure;
FIG. 11 is a schematic structural diagram of an inner insulation member according to an embodiment of the present disclosure;
FIG. 12 is a schematic structural diagram of an inner insulation member according to another embodiment of the present disclosure;
FIG. 13 is a schematic structural diagram of an inner insulation member according to another embodiment of the present disclosure;
FIG. 14 is a schematic structural diagram of an inner insulation member according to another embodiment of the present disclosure;
FIG. 15 is a schematic structural diagram of an inner insulation member according to another embodiment of the present disclosure;
FIG. 16 is a schematic structural diagram of an inner insulation member according to another embodiment of the present disclosure;
FIG. 17 is a schematic structural diagram of an inner insulation member according to another embodiment of the present disclosure;
FIG. 18 is a schematic structural diagram of an inner insulation member according to another embodiment of the present disclosure;
FIG. 19 is a schematic structural diagram of a bottom plate and a peripheral side plate according to an embodiment of the present disclosure;
FIG. 20 is a schematic structural diagram of a bottom plate and a peripheral side plate according to another embodiment of the present disclosure;
FIG. 21 is a cross-sectional view of a battery according to an embodiment of the present disclosure; and
FIG. 22 is an exploded view of a battery according to an embodiment of the present disclosure.

### DETAILED DESCRIPTION

To make a person skilled in the art to better understand the technical solutions of the present disclosure, the technical solutions in the embodiments of the present disclosure are described clearly and completely below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of present disclosure without making creative efforts shall fall within the protection scope of present disclosure.

It should be noted that, when an element is referred to as being "arranged on" another element, the element can be directly on another component or there can be a centered element. When an element is considered to be "connected" to another element, the element can be directly connected to another element or there may be a centered element. The terms "vertical", "horizontal", "left", "right", and similar expressions used herein are for illustrative purposes only and do not necessarily represent the only embodiment.

Unless otherwise defined, all technical and scientific terms used herein have the same meaning as those commonly understood by a person skilled in the art to which the present disclosure belongs. The terms used in this specification of the present disclosure are merely intended to describe objectives of the specific embodiments, but are not intended to limit the present disclosure. The term "and/or" used herein includes any and all combinations of one or more related listed items.

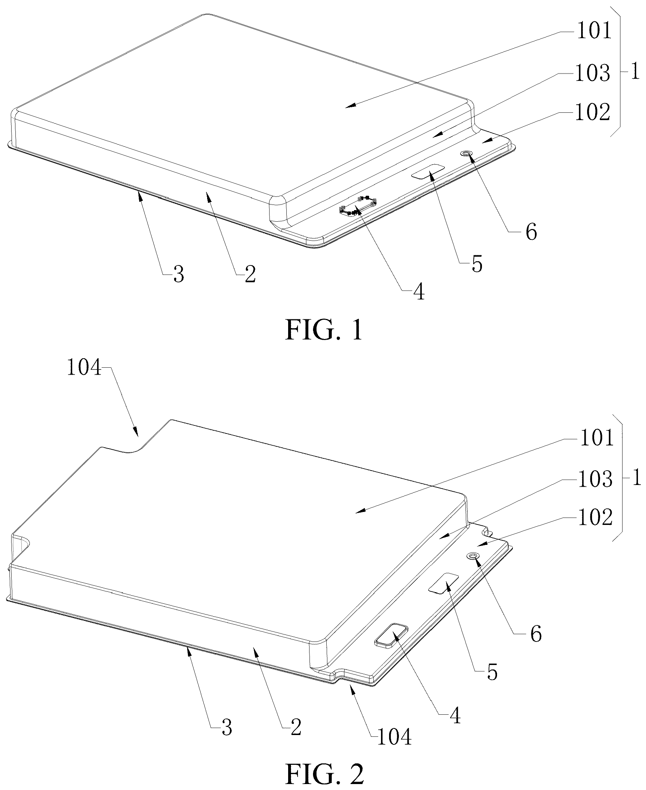

As shown in FIG. 1 to FIG. 3, the present disclosure discloses a battery case, including a bottom plate 1, a peripheral side plate 2, and an electrode assembly.

The bottom plate 1 has a first plate body 101, a second plate body 102, and a connecting plate body 103 connected between the first plate body 101 and the second plate body 102. In this embodiment, a step structure is formed between the first plate body 101 and the second plate body 102.

The peripheral side plate 2 is annularly arranged at an outer periphery of the bottom plate 1 and is connected to the bottom plate 1 to form an accommodating cavity with an opening 201 in one end.

The electrode assembly includes a positive electrode assembly 4 arranged on the second plate body 102.

The bottom plate 1 is connected to the peripheral side plate 2 annularly arranged at the outer periphery of the bottom plate 1 to form the accommodating cavity with the opening in one end. The bottom plate 1 is divided into three parts: the first plate body 101, the second plate body 102, and the connecting plate body 103 connected between the first plate body 101 and the second plate body 102. The positive electrode assembly 4 is arranged on the second plate body 102. On the one hand, a width and area of the second plate body 102 for mounting the positive electrode assembly 4 can be freely controlled, and on the other hand, there is no obstruction from other components in a mounting direction. This facilitates a mounting operation of the positive electrode assembly 4, and lowers a requirement on a packaging process, thereby greatly improving a production efficiency and a qualification rate of a product.

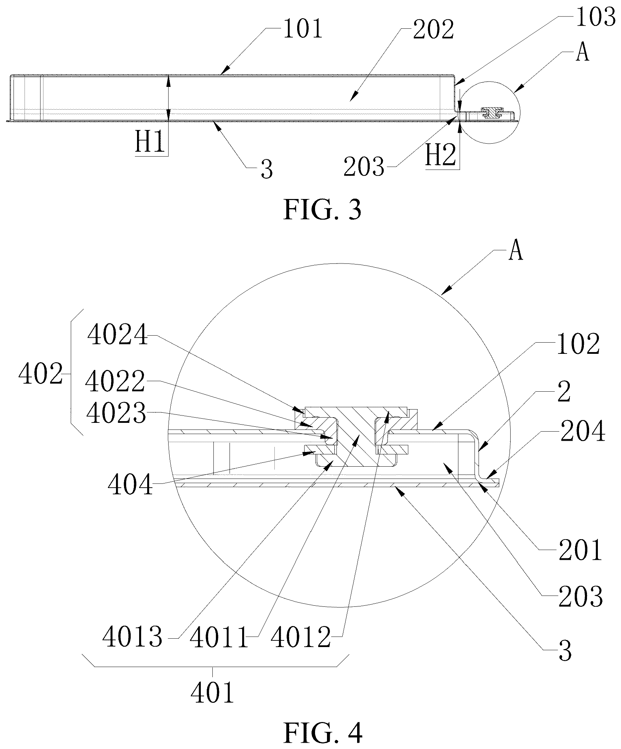

As shown in FIG. 3 to FIG. 5, the battery case further includes a cover plate 3 connected to the opening 201. The cover plate 3 is arranged opposite to the first plate body 101 and the second plate body 102, and seals the accommodating cavity, so that the accommodating cavity is formed into a closed cavity. It can be understood that the cover plate 3 is located on a side opposite to the bottom plate 1.

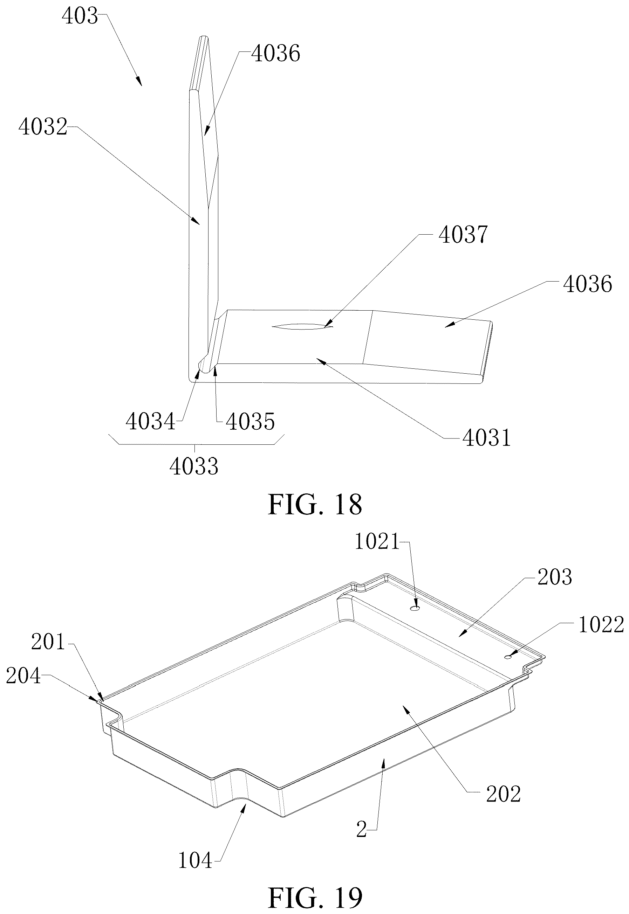

The bottom plate 1 and the cover plate 3 are both made of metals or alloy materials. The alloy material is preferably stainless steel. Preferably, in this embodiment, the bottom plate 1 and the cover plate 3 are both made of conductive stainless steel materials. As shown in FIG. 1 and FIG. 2, the bottom plate 1 includes a first plate body 101, a second plate body 102, and a connecting plate body 103 connected between the first plate body 101 and the second plate body 102. Shapes of the first plate body 101 and the second plate body 102 are not limited, and may be rectangular, L-shaped, T-shaped, circular, I-shaped, or the like. In some embodiments, as shown in FIG. 1, the first plate body 101 and the second plate body 102 are both rectangular. In some other embodiments, as shown in FIG. 2, gaps 104 are provided in free ends of the first plate body 101 and the second plate body 102, to facilitate subsequent assembling and fixing. The first plate body 101 and the second plate body 102 are not located at the same horizontal position. Preferably, the first plate body 101 and the second plate body 102 are arranged in parallel and form a step structure. In addition, the second plate body 12 is close to the opening 201. It can be understood that as shown in FIG. 3 and FIG. 19, a distance H1 between the first plate body 101 and the cover plate 3 is greater than a distance H2 between the second plate body 102 and the cover plate 3. A first accommodating cavity 202 for placing a battery cell is formed between the first plate body 101 and the cover plate 3. A second accommodating cavity 203 for placing the positive electrode assembly 4 is formed between the second plate body 102 and the cover plate 3. The first accommodating cavity 202 and the second accommodating cavity 203 are communicated with each other to form an accommodating cavity.

In a preferred implementation, as shown in FIG. 4, FIG. 5, and FIG. 19, to facilitate a mounting of the cover plate 3, a free end of the peripheral side plate 2 extends outward to form a flange 204. Preferably, the flange 204 is parallel to the first plate body 101 or the second plate body 102, and horizontally extends away from the accommodating cavity. The cover plate 3 is connected to the flange 204 by adhesive dispensing after welding, thereby sealing the accommodating cavity.

As shown in FIG. 3 and FIG. 4, at least a portion of the positive electrode assembly 4 is arranged on an inner side of the second plate body 102. In some embodiments, as shown in FIG. 4, the positive electrode assembly 4 includes a positive terminal 401 and an outer insulation member 402. The outer insulation member 402 separates the positive terminal 401 from the second plate body 102. In this embodiment, the positive terminal 401 and the outer insulation member 402 are fixed to the second plate body 102 in a riveted manner, so that the positive terminal 401 effectively fixes a position of the outer insulation member 402.

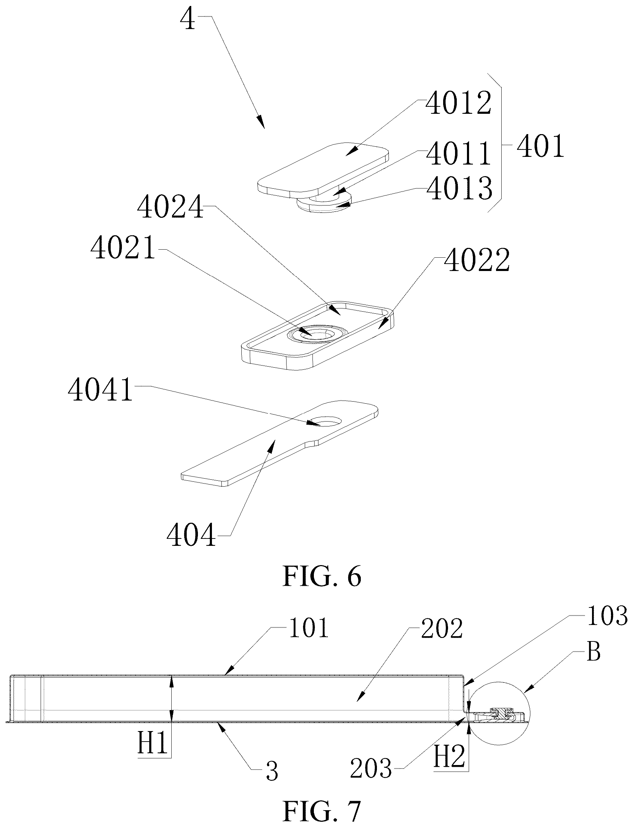

As shown in FIG. 4, the positive electrode assembly 4 is arranged on the second plate body 102, and the positive electrode assembly 4 is partially arranged in the second accommodating cavity 203 and partially exposed out of the battery case. The positive electrode assembly 4 includes a positive terminal 401, an outer insulation member 402, and a conductive sheet 404. In this embodiment, the positive terminal 401 and the conductive sheet 404 are both made of aluminum materials. The positive terminal 401 includes a terminal body 4011, and a first sheet body 4012 and a second sheet body 4013 connected to two ends of the terminal body 4011. In this embodiment, as shown in FIG. 6, a cross-sectional shape of the terminal body 4011 is circular; a cross-sectional shape of the first sheet body 4012 is rectangular; and a cross-sectional shape of the second sheet body 4013 is circular. A size of the first sheet body 4012 is greater than that of the second sheet body 4013, and a diameter of the second sheet body 4013 is greater than that of the terminal body 4011. A first avoidance hole 1021 corresponding to the terminal body 4011 is provided in the second plate body 102. A second avoidance hole 4021 corresponding to the terminal body 4011 is provided in the outer insulation member 402. A fourth avoidance hole 4041 corresponding to the terminal body 4011 is provided in the conductive sheet 404. The terminal body 4011 passes through the second avoidance hole 4021, the first avoidance hole 1021, and the fourth avoidance hole 4041 in sequence. The first sheet body 4012 is arranged on an outer side of the second avoidance hole 4021 and away from one end of the second accommodating cavity 203 (that is, exposed out of the battery case). The second sheet body 4013 is arranged on an outer side of the fourth avoidance hole 4041 and close to one end of the second accommodating cavity 203 (that is, arranged inside the second accommodating cavity 203).

In this embodiment, as shown in FIG. 4, the outer insulation member 402 is located on an outer side of the second plate body 102, is annularly arranged outside the terminal body 4011, and is partially embedded into the second plate body 102. As shown in FIG. 4 and FIG. 6, the outer insulation member 402 includes a ring body 4022 provided with the second avoidance hole 4021 and a sleeve 4023 extending along an axis of the second avoidance hole 4021. The sleeve 4023 is arranged on the second plate body 102 in a penetrating manner. The ring body 4022 is further provided with a limiting slot 4024 for accommodating the first sheet body 4012. The first sheet body 4012 is exposed out of the second plate body 102. The limiting slot 4024 is communicated with the second avoidance hole 4021. The ring body 4022 and the sleeve 4023 are annularly arranged outside the terminal body 4011 through the second avoidance hole 4021, and the sleeve 4023 is partially embedded into the second plate body 102. The positive terminal 401 is insulated from an outer wall of the second plate body 102 and an inner wall of the first avoidance hole 4021 through the outer insulation member 402, so that the positive terminal 401 is in an insulation connection with the second plate body 102, thereby avoiding a short-circuit phenomenon.

It can be understood that since a distance between the second plate body 102 and the cover plate 3 (i.e. a height of the second accommodating cavity 203) is relatively small, under the impact of factors such as a processing error, an assembling error, and deformation of the housing, one end of the positive electrode assembly 4 located on the inner side of the second plate body 102 may be in contact with the cover plate 3, causing the short-circuit phenomenon, which causes an adverse effect on normal operation of a battery. Therefore, in some embodiments, as shown in FIG. 7 to FIG. 10, the positive electrode assembly 4 further includes an inner insulation member 403, and the inner insulation member 403 separates the positive terminal 401 from the cover plate 3. In this embodiment, the positive terminal 401 and the inner insulation member 403 are fixed in a riveted manner, so that the positive terminal 401 effectively fixes a position of the inner insulation member 403.

At least a portion of the cover plate 3 is arranged opposite to the second plate body 102. The inner insulation member 403 separates the positive terminal 401 from the cover plate 3. A short-circuit phenomenon generated when the positive terminal 401 is in contact with the cover plate 3 is avoided, and the second plate body 102 and the cover plate 3 can be insulated at the same time.

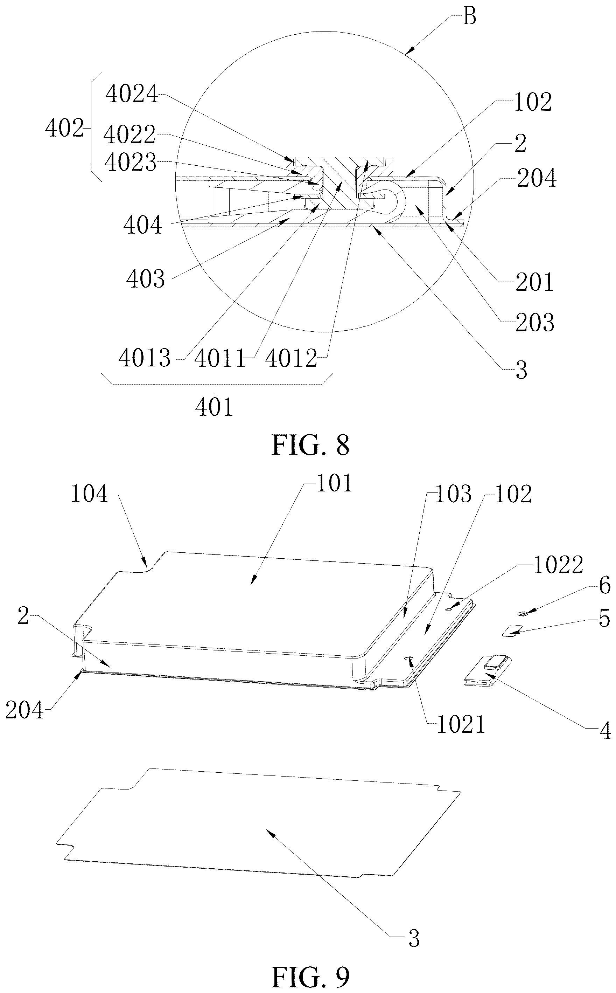

As shown in FIG. 8, the outer insulation member 402 is mostly located on the outer side of the second plate body 102, and the inner insulation member 403 is located on the inner side of the second plate body 102. The outer insulation member 402 separates the positive terminal 401 from the second plate body 102, and the inner insulation member 403 separates the positive terminal 401 from the second plate body 102 and the cover plate 3. By the cooperative use between the outer insulation member 402 and the inner insulation member 403 to achieve the insulation connection between the positive terminal 401 and the second plate body 102, and by separation of the positive terminal 401 from the cover plate 3 through the inner insulation member 403, the short-circuit phenomenon generated when the positive terminal 401 is in contact with the cover plate 3 is avoided.

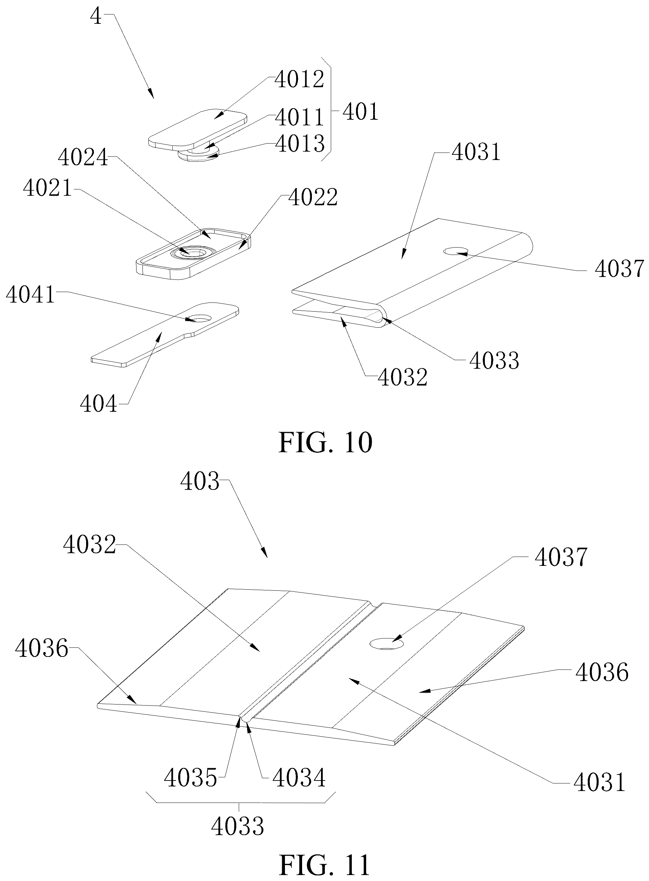

In a preferred implementation, as shown in FIG. 10 to FIG. 18, the inner insulation member 403 includes a first arm portion 4031 and a second arm portion 4032 arranged opposite to each other. As shown in FIG. 8, the positive terminal 401 is at least partially located between the first arm portion 4031 and the second arm portion 4032, and a groove 4033 is provided in a joint between the first arm portion 4031 and the second arm portion 4032. In this embodiment, the inner insulation member 403 is made of a polymer material, preferably a silica gel material or a plastic material, and has good insulation performance and flexibility. Due to the elasticity of the inner insulation member 403 itself, the first arm portion 4031 and the second arm portion 4032 may be folded through the groove 4033 and arranged opposite to each other.

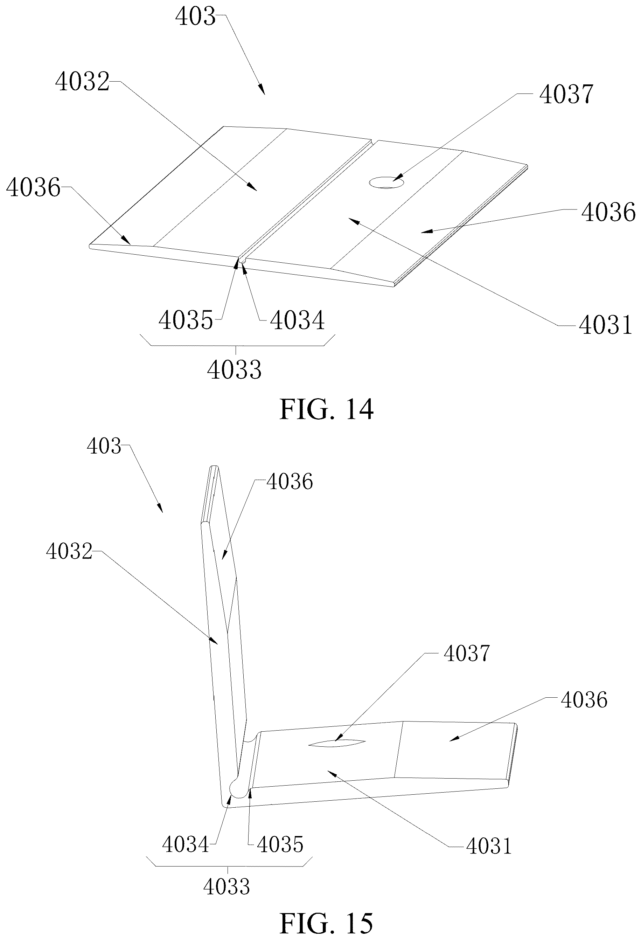

As shown in FIG. 11 to FIG. 14, preferably, an angle between the first arm portion 4031 and the second arm portion 4032 is 0 to 180° when the inner insulation member 403 is in a free state. As shown in FIG. 15 to FIG. 18, more preferably, an angle between the first arm portion 4031 and the second arm portion 4032 is 0 to 90° when the inner insulation member 403 is in a free state. As shown in FIG. 8 to FIG. 10, in a usage state of the inner insulation member 403, the first arm portion 4031 and the second arm portion 4032 are folded through the groove 4033 and arranged opposite to each other up and down. A space between the positive terminal 401 and the cover plate 3 can be effectively covered by the first arm portion 4031 or the second arm portion 4032, to prevent the positive terminal 401 from being in contact with the cover plate 3.

The groove 4033 includes a groove bottom surface 4034 and a connecting surface 4035 connected between the groove bottom surface 4034 and the first arm portion 4031 or the second arm portion 4032. The groove bottom surface 4034 is an arc, a rectangle, a trapezoid, a trapezoid with a chamfer, or a rectangle with a chamfer, and the connecting surface 4035 is an arc surface, a plane, or a slope.

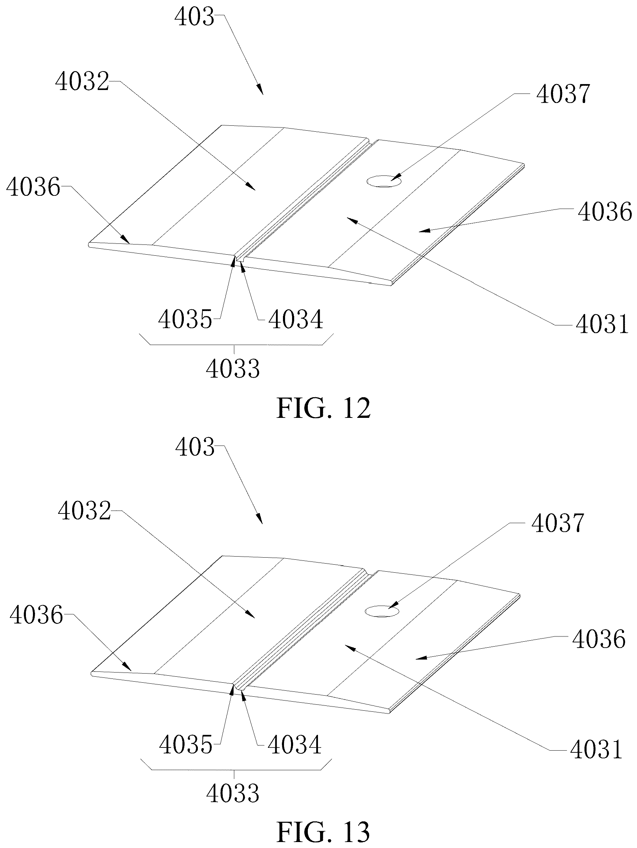

Further, as shown in FIG. 11 to FIG. 14, an angle between the first arm portion 4031 and the second arm portion 4032 is 180° when the inner insulation member 403 is in a free state. In some embodiments, as shown in FIG. 11, a cross-sectional shape of the groove bottom surface 4034 is an arc, and the connecting surface 4035 is an arc surface. In some other embodiments, as shown in FIG. 12, a cross-sectional shape of the groove bottom surface 4034 is a rectangle, and the connecting surface 4035 is an arc surface. In some other embodiments, as shown in FIG. 13, a cross-sectional shape of the groove bottom surface 4034 is a trapezoid with a chamfer, and the connecting surface 4035 is an arc surface. In some other embodiments, as shown in FIG. 14, a cross-sectional shape of the groove bottom surface 4034 is a rectangle with a chamfer, and the connecting surface 4035 is a plane.

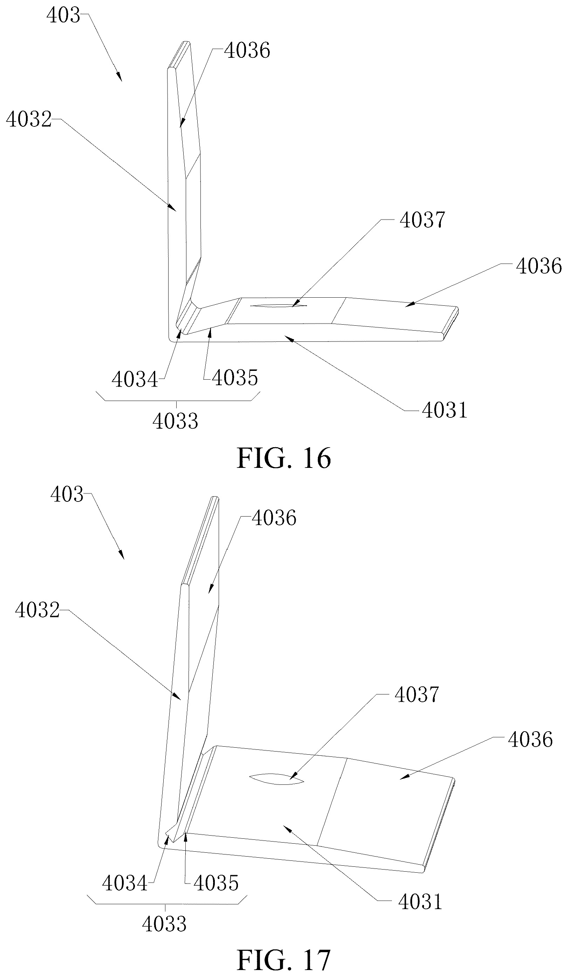

Further, as shown in FIG. 15 to FIG. 18, an angle between the first arm portion 4031 and the second arm portion 4032 is 90° when the inner insulation member 403 is in a free state. In some embodiments, as shown in FIG. 15, a cross-sectional shape of the groove bottom surface 4034 is an arc, and the connecting surface 4035 is an arc surface. In some other embodiments, as shown in FIG. 16, a cross-sectional shape of the groove bottom surface 4034 is a rectangle, and the connecting surface 4035 is an arc surface. In some other embodiments, as shown in FIG. 17, a cross-sectional shape of the groove bottom surface 4034 is a trapezoid with a chamfer, and the connecting surface 4035 is a slope. In some other embodiments, as shown in FIG. 18, a cross-sectional shape of the groove bottom surface 4034 is a rectangle with a chamfer, and the connecting surface 4035 is a slope.

In this embodiment, the cross-sectional shape of the groove bottom surface 4034 is not limited. It is easier to fold the first arm portion 4031 and the second arm portion 4032 through the structure of the groove 4033, and a void is formed at a folded position, to prevent connecting ends of the first arm portion 4031 and the second arm portion 4032 after the folding from interfering with each other, so that the space is reserved therebetween to facilitate the mounting and positioning of the positive terminal 401.

A side wall 4036 of a free end of each of the first arm portion 4031 and the second arm portion 4032 is an arc surface, a slope, or a combination of the arc surface and the slope, so as to further prevent the free ends of the first arm portion 4031 and the second arm portion 4032 after folding from interfering with each other, which is properly designed.

As shown in FIG. 8, the positive electrode assembly 4 is arranged on the second plate body 102, and the positive electrode assembly 4 is partially arranged in the second accommodating cavity 203 and partially exposed out of the battery case. In this embodiment, as shown in FIG. 10, a third avoidance hole 4037 corresponding to the terminal body 4011 is provided in the inner insulation member 403. The terminal body 4011 passes through the second avoidance hole 4021, the first avoidance hole 1021, the third avoidance hole 4037, and the fourth avoidance hole 4041 in sequence. The first sheet body 4012 is arranged on an outer side of the second avoidance hole 4021 and away from one end of the second accommodating cavity 203 (that is, exposed out of the battery case). The second sheet body 4013 is arranged on an outer side of the fourth avoidance hole 4041 and close to one end of the second accommodating cavity 203 (that is, arranged inside the second accommodating cavity 203).

The third avoidance hole 4037 is provided in the first arm portion 4031 or the second arm portion 4032 of the inner insulation member 403. In this embodiment, the third avoidance hole 4037 being provided in the first arm portion 4031 is taken as an example. The sleeve 4023 of the outer insulation member 402 passes through the first avoidance hole 4021 of the second plate body 102 and is partially embedded into the third avoidance hole 4037 of the first arm portion 4031. Certainly, the sleeve 4023 may not be embedded into the first arm portion 4031, and may directly press against an outer side of the first arm portion 4031 through the first avoidance hole 1021. The first arm portion 4031 is annularly arranged outside the terminal body 4011 through the third avoidance hole 4037. Since the first arm portion 4031 is fixed to the positive terminal 401 in a riveted manner, the first arm portion 4031 is fixedly fitted with the second plate body 102, and contact between the positive terminal 401 and the inner wall of the second plate body 102 is isolated by the first arm portion 4031 of the inner insulation member 403. The conductive sheet 404 is annularly arranged outside the terminal body 4011 through the fourth avoidance hole 4041. The conductive sheet 404 is located between the first arm portion 4031 and the second arm portion 4032, and the second sheet body 4013 of the positive terminal 401 is located on an outer side of the conductive sheet 404. Since the first arm portion 4031 is fixed to the positive terminal 401 in a riveted manner, the second arm portion 4032 may directly elastically press against an inner side of the cover plate 3, thereby avoiding a procedure of fixing the second arm portion 4032. Certainly, the second arm portion 4032 may alternatively be fitted with the cover plate 3 in a glued manner, and the second arm portion 4032 of the inner insulation member 403 isolates a collision between the second sheet body 4013 of the positive terminal 401 and the cover plate 3, thereby preventing a short circuit. During use of the battery case, the battery cell is in conductive connection with the conductive sheet 404. A length and area of the conductive sheet 404 may be made to be large as appropriate, so as to facilitate connection to the battery cell.

As shown in FIG. 1, FIG. 2, FIG. 5, and FIG. 9, the electrode assembly further includes a negative electrode assembly 5 that is in conductive connection with the second plate body 102. In this embodiment, the negative electrode assembly 5 includes a connecting sheet connected to the second plate body 102. The connecting sheet is made of a nickel material. The negative electrode assembly 5 is arranged outside the second plate body 102. During use of the battery case, the battery cell only needs to be connected to the second plate body 102, so as to be in conductive connection to the negative electrode assembly 5.

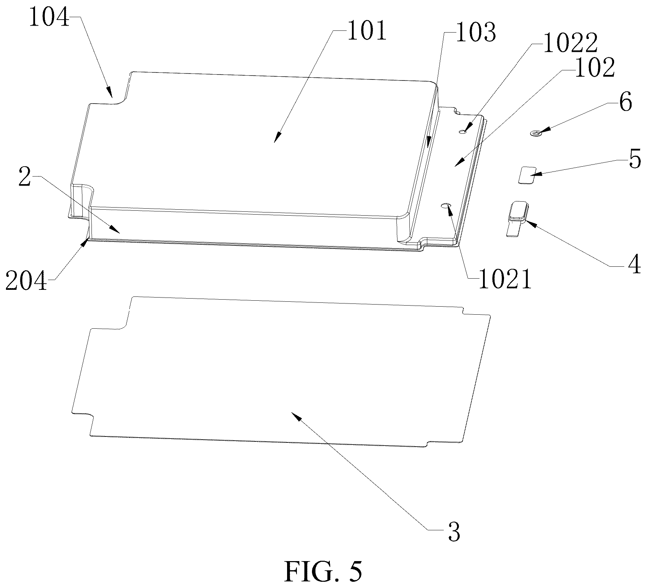

In this embodiment, as shown in FIG. 5 and FIG. 9, the second plate body 102 is further provided with a liquid injection hole 1022 for an electrolyte solution (not shown in the figure) to enter the accommodating cavity. The liquid injection hole 1022 is provided with a liquid blocking plug 6 that is in interference fit. The liquid blocking plug 6 is made of stainless steel. The liquid injection hole 1022 is provided in the second plate body 102 and is located on one side close to the negative electrode assembly 5. The accommodating cavity is conveniently filled with an electrolyte solution through the liquid injection hole 1022.

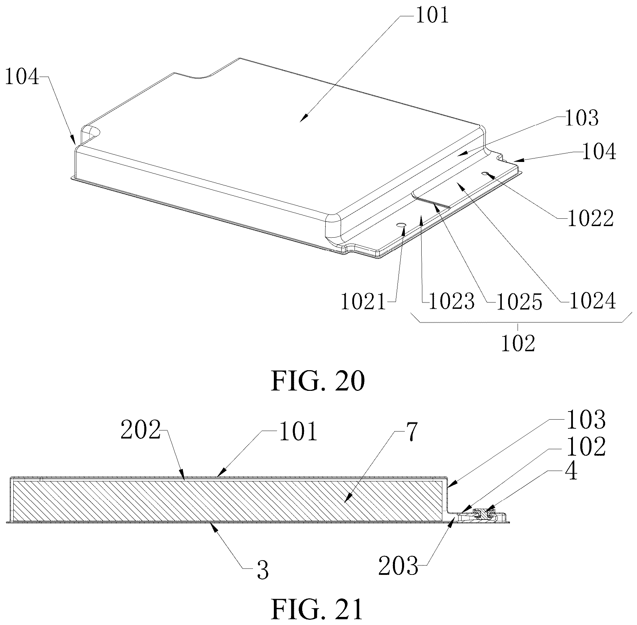

Further, the second plate body 102 is a single independent component or is composed of a plurality of components. In some embodiments, as shown in FIG. 1, FIG. 2, FIG. 5, FIG. 9, and FIG. 19, the second plate body 102 is a single independent component. In some other embodiments, the second plate body 102 is composed of a plurality of components. As shown in FIG. 20, in some other embodiments, the second plate body 102 includes a first portion 1023 and a second portion 1024. The first portion 1023 and the second portion 1024 are connected to each other through a connecting portion 1025. The second portion 1024 is higher than the first portion 1023, and the first portion 1023 and the second portion 1024 form a step structure. After the structure is used, the positive electrode assembly 4 is arranged in the first portion 1023, and the negative electrode assembly 5 and the liquid injection hole 1022 are arranged in the second portion 1024. It may be understood that the first portion 1021 and the second portion 1022 form the step structure, so that when laser soldering is performed on the electrode assembly subsequently, it is convenient to obtain a point after a laser source emits laser and it is convenient for subsequent assembling. In addition, it is possible that the first portion 1023 is higher than the second portion 1024.

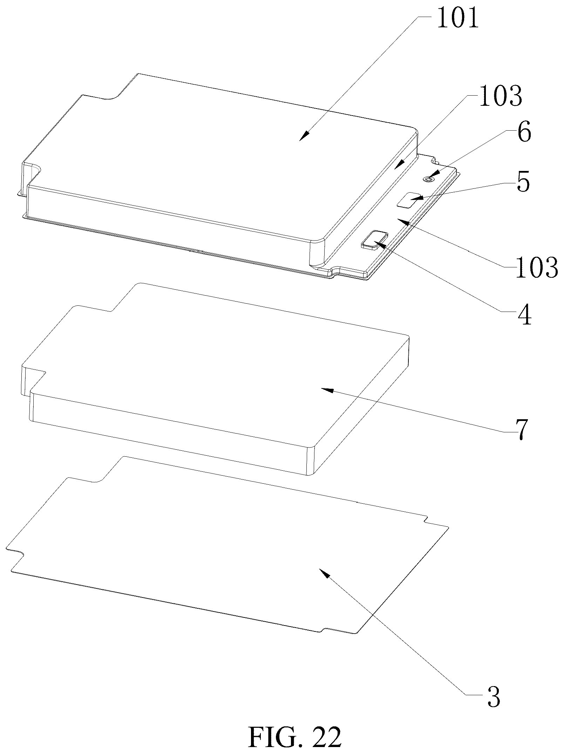

In a second aspect, as shown in FIG. 21 and FIG. 22, the present disclosure further provides a battery, including a battery case with the foregoing structure, and a battery cell 7 arranged in a first accommodating cavity 202 of the battery case. The battery cell 7 is in conductive connection with a conductive sheet 404 of a positive electrode assembly 4. In addition, the accommodating cavity of the battery case may be filled with an electrolyte solution. A role of conducting ions can be played between the positive electrode assembly 4 and the negative electrode assembly 5 through the electrolyte solution, so that the battery is ensured to obtain advantages of a high voltage, high specific energy, and the like.

In a preferred implementation, a shape of the battery cell 7 corresponds to a cross-sectional shape of the first accommodating cavity 202.

In a third aspect, the present disclosure further provides an electronic device, applying a battery case with the foregoing structure; or a battery with the foregoing structure.

It should be understood that the foregoing description is used for illustration rather than limitation. After reading the foregoing descriptions, many embodiments and many applications in addition to the provided examples will be apparent to a person skilled in the art. Therefore, the scope of the present teaching should not be determined with reference to the foregoing descriptions, but should be determined with reference to the foregoing claims and the full scope of equivalents to which the claims belong. For the purpose of completeness, the disclosure of all articles and references, including patent applications and announcements, is incorporated herein by reference. The omission of any aspect of the subject disclosed herein in the foregoing claims is not intended to give up the terminal body content, nor should it be considered that the applicant does not consider the subject as a part of the disclosed inventive subject.

## Claims

1. A battery case, comprising:
a bottom plate, having a first plate body, a second plate body, and a connecting plate body connected between the first plate body and the second plate body;
a peripheral side plate, annularly arranged at an outer periphery of the bottom plate and connected to the bottom plate to form an accommodating cavity with an opening in one end; and
a positive electrode assembly, arranged on the second plate body.

2. The battery case according to claim 1, further comprising a cover plate connected to the opening, wherein the cover plate is arranged opposite to the first plate body and the second plate body and seals the accommodating cavity.

3. The battery case according to claim 2, wherein a free end of the peripheral side plate extends outward to form a flange; the cover plate is connected to the flange; and a distance between the first plate body and the cover plate is greater than a distance between the second plate body and the cover plate.

4. The battery case according to claim 3, wherein the accommodating cavity comprises a first accommodating cavity formed between the cover plate and the first plate body and a second accommodating cavity formed between the cover plate and the second plate body, and the first accommodating cavity and the second accommodating cavity are communicated with each other.

5. The battery case according to claim 4, wherein at least a portion of the positive electrode assembly is arranged on an inner side of the second plate body; the positive electrode assembly comprises a positive terminal and an outer insulation member; and the outer insulation member separates the positive terminal from the second plate body.

6. The battery case according to claim 5, wherein the positive terminal comprises a terminal body and a first sheet body connected to an end portion of the terminal body; the outer insulation member is annularly arranged outside the terminal body and is partially embedded in the second plate body; and the outer insulation member comprises a ring body and a sleeve connected to the ring body; the sleeve is sleeved outside the terminal body and is arranged in the second plate body in a penetrating manner; the ring body is further provided with a limiting slot for accommodating the first sheet body; and the first sheet body is exposed outside the second plate body.

7. The battery case according to claim 6, wherein the positive electrode assembly further comprises an inner insulation member, and the inner insulation member separates the positive terminal from the cover plate.

8. The battery case according to claim 7, wherein the inner insulation member separates the positive terminal from the second plate body; and the inner insulation member comprises a first arm portion and a second arm portion arranged opposite to each other; and the positive terminal is at least partially located between the first arm portion and the second arm portion.

9. The battery case according to claim 8, wherein the first arm portion is fitted with the second plate body, and the second arm portion is fitted with the cover plate; and the positive terminal comprises a second sheet body; the first sheet body and the second sheet body are respectively located at two ends of the terminal body; the second sheet body is located between the first arm portion and the second arm portion; and the terminal body passes through the second plate body and extends to an outside of the second plate body.

10. The battery case according to claim 8, wherein a groove is provided in a joint between the first arm portion and the second arm portion, and the first arm portion and the second arm portion are folded through the groove and arranged opposite to each other.

11. The battery case according to claim 10, wherein an angle between the first arm portion and the second arm portion is 0 to 180° or 0 to 90° when the inner insulation member is in a free state.

12. The battery case according to claim 11, wherein the groove comprises a groove bottom surface and a connecting surface connected between the groove bottom surface and the first arm portion or the second arm portion; and the groove bottom surface is an arc, a rectangle, a trapezoid with a chamfer, or a rectangle with a chamfer; and the connecting surface is an arc surface, a plane, or a slope.

13. The battery case according to any one of claims 1 to 12, further comprising a negative electrode assembly electrically connected to the second plate body, wherein the negative electrode assembly comprises a connecting sheet connected to the second plate body.

14. The battery case according to claim 13, wherein the second plate body is a single independent component or is composed of a plurality of components.

15. The battery case according to claim 14, wherein the second plate body comprises a first portion and a second portion; the first portion is connected to the second portion through a connecting portion; the first portion and the second portion form a step structure; and the positive electrode assembly and the negative electrode assembly are respectively arranged on the first portion and the second portion.

16. A battery, comprising the battery case according to any one of claims 1 to 15, and a battery cell arranged in a first accommodating cavity of the battery case.

17. An electronic device, comprising the battery case according to any one of claims 1 to 15; or comprising the battery according to claim 16.
